# EUROPÄISCHE PATENTSCHRIFT

(11) **EP 0 624 309 B1**
(45) Veröffentlichungstag und Bekanntmachung des Hinweises auf die Patenterteilung: **06.11.1996**
(21) Anmeldenummer: 94107250.6
(22) Anmeldetag: 09.05.1994
(51) Int. Cl.: A01D 41/14

(54) **Landwirtschaftliche Arbeitsmaschine**
Agricultural machine
Machine agricole

(30) Priorität: 13.05.1993 DE 4315993; 02.07.1993 DE 4322018
(43) Veröffentlichungstag der Anmeldung: 17.11.1994
(73) Patentinhaber: Carl Geringhoff GmbH & Co KG, D-59227 Ahlen (DE)
(72) Erfinder: Wiegert, Ludger, Dipl.-Ing., D-48346 Ostbevern (DE)
(74) Vertreter: Habbel, Hans-Georg, Dipl.-Ing.

(56) Entgegenhaltungen:
- EP-A- 0 326 836
- EP-A- 0 373 406
- EP-A- 0 442 067
- DE-A- 4 030 066

## Beschreibung

Die Erfindung bezieht sich auf eine landwirtschaftliche Arbeitsmaschine gemäß dem Oberbegriff des Patentanspruches.

Aus der gattungsbildenden DE 40 30 066 A1 ist eine landwirtschaftliche Maschine mit frontseitigem Schneidwerk bekannt, bei welcher die beiden Teile des Schneidwerkes zum Straßentransport aufeinandergeklappt werden, um auf diese Weise eine auf öffentlichen Verkehrswegen zulässige Maschinenbreite zu erreichen. In dieser Literaturstelle wird vorgeschlagen, daß das schwenkbare Vorsatzteil mittels einer Koppel mit zur Schwenkachse parallelen Achsen an einem Lagerbock angelenkt ist, der ein fester Bestandteil einer Tragbasis ist, und daß das andere Vorsatzteil querbeweglich gelagert ist und zu dieser Querbewegung durch einen Kolben-Zylinder-Antrieb angetrieben wird, wobei die Querbewegung des querbeweglichen Vorsatzteiles die Schwenkbewegung des verschwenkbaren Vorsatzteiles zwangsweise bewirkt. Bei dieser Anordnung treten unnötig hohe Kräfte auf, und außerdem wird die Stabilität der Maschine in Frage gestellt.

Außerdem wird in dieser Literaturstelle vorgeschlagen, den Schwenkvorgang mit Hilfe eines rotierenden Antriebsmotors durchzuführen, dessen Antriebswelle mit dem schwenkbaren Vorsatzteil in Verbindung steht.

Eine solche Anordnung erscheint aufwendig, da mit dem relativ kleinen Antriebsmotor sowohl die Schwenkbewegung des einen und die Querbewegung des anderen Vorsatzteiles bewerkstelligt werden müßte.

Bei der in der EP-326 836 B1 beschriebenen Anordnung sind die beiden Vorsatzteile gelenkig über eine gemeinsame Schwenkachse miteinander verbunden.

Die Schwenkachse liegt dabei im wesentlichen vertikal über der Trennebene zwischen den beiden Vorsatzteilen. Auf dem verschiebbaren Vorsatzteil ist ein als hydraulische Kolbenzylinderanordnung ausgebildeter Schwenkantrieb angeordnet, bei deren Betätigung das schwenkbare Vorsatzteil um die Schwenkachse geschwenkt und dabei auf das mit der hydraulischen Kolbenzylinderanordnung ausgerüstete verschiebbare Vorsatzteil gelegt wird. Das das aufschwenkbare Vorsatzteil tragende verschiebbare Vorsatzteil wird über eine zweite hydraulische Kolbenzylinderanordnung mittig vor die Maschine verschoben, so daß dadurch eine Querverkürzung des Arbeitsvorsatzes für den Straßentransport erreicht wird.

Bei dieser bekannten Anordnung sind zwei hydraulische Kolbenzylinderanordnungen vorgesehen, die unabhängig voneinander betätigt werden, und während der Verschiebebewegung erfolgt eine starke Gewichtsverlagerung bezüglich der mittleren Längsachse der den Arbeitsvorsatz tragenden Maschine, so daß hier eine gewisse Kippgefahr besteht.

Um die doppelte Kolbenzylinderanordnung zu vermeiden, ist bereits in der EP 442 067 B1 vorgeschlagen worden, die beiden Vorsatzteile wiederum gelenkig miteinander zu verbinden, aber das zu verschwenkende und auf das andere verschiebbare Vorsatzteil zu legende Vorsatzteil zusätzlich schwenkbar an der Arbeitsmaschine festzulegen. Wird nunmehr das verschiebbare Vorsatzteil verschoben, wird dieses Vorsatzteil gleichzeitig nach unten verschwenkt. Diese Anordnung hat den Nachteil, daß während der Schwenk- und Vorschubbewegung, insbesondere das verschiebbare Vorsatzteil, sehr weit nach unten kommen muß, um die Schwenkbewegung des anderen Vorsatzteiles durchzuführen. Dies macht es erforderlich, daß der gesamte Arbeitsvorsatz sehr hoch ausgehoben werden muß, was heute nur begrenzt möglich ist, da anderenfalls die an der Oberseite des Arbeitsvorsatzes angeordneten Arbeitsgeräte mit dem Führerhaus bzw. dem Führerstand der Maschine in Kontakt kommen können.

Der Erfindung liegt die Aufgabe zugrunde, die gattungsbildende Einrichtung dahingehend zu verbessern, daß für das Einklappen in die Straßentransportstellung nicht so hohe Kräfte erforderlich sind, andererseits eine außermittige Belastung der Arbeitsmaschine und ein Absenken des verschiebbaren Vorsatzteiles vermieden wird.

Diese der Erfindung zugrundeliegende Aufgabe wird durch die Lehre des Patentanspruches gelöst.

Mit anderen Worten ausgedrückt sind die beiden Vorsatzteile unmittelbar miteinander über ein Schwenklager gekoppelt, wobei die hydraulische Kolben-Zylinder-Anordnung an einem Lenkergestänge angreift, das anderenendes einmal an dem querbeweglichen, zum anderen an dem schwenkbaren Vorsatzteil angreift.

Ein Ausführungsbeispiel der Erfindung wird nachfolgend anhand der Zeichnungen erläutert. Die Zeichnungen zeigen dabei in
- Fig. 1: die Arbeitsmaschine mit in Arbeitsstellung befindlichen Vorsatzteilen, in den
- Fig. 2 bis 4: verschiedene Stadien der Schwenkbewewegung und in
- Fig. 5: die beiden übereinander gelagerten Vorsatzteile, die somit zum Straßentransport geeignet sind.

In der Zeichnung ist mit 1 eine Arbeitsmaschine bezeichnet, die an ihrer Frontseite einen Grundrahmen 3 trägt, an dem zwei Vorsatzteile A und B gelagert sind. Die beiden Vorsatzteile A und B schließen über eine in Fahrtrichtung ausgerichtete Gelenkachse 2 aneinander an, wobei diese Gelenkachse 2 auch an den beiden Vorsatzteilen A und B angeordneten Stützkonstruktionen 7 bzw. 8 gelagert ist.

Das verschiebbare, erste Vorsatzteil A wird in einer in der Zeichnung nicht gezeigten Führungsbahn an dem Grundrahmen 3 getragen und das verschwenkbare, zweite Vorsatzteil B weist einen weiteren Stützbock 9 auf, der an seinem oberen Ende eine Gelenkachse 6 besitzt, an die ein Distanzlenker 4 anschließt, der anderenendes ortsfest an einem Stützbock 10 des Grundrahmens 3 anschließt, so daß hier ebenfalls eine Gelenkachse 5 gebildet wird.

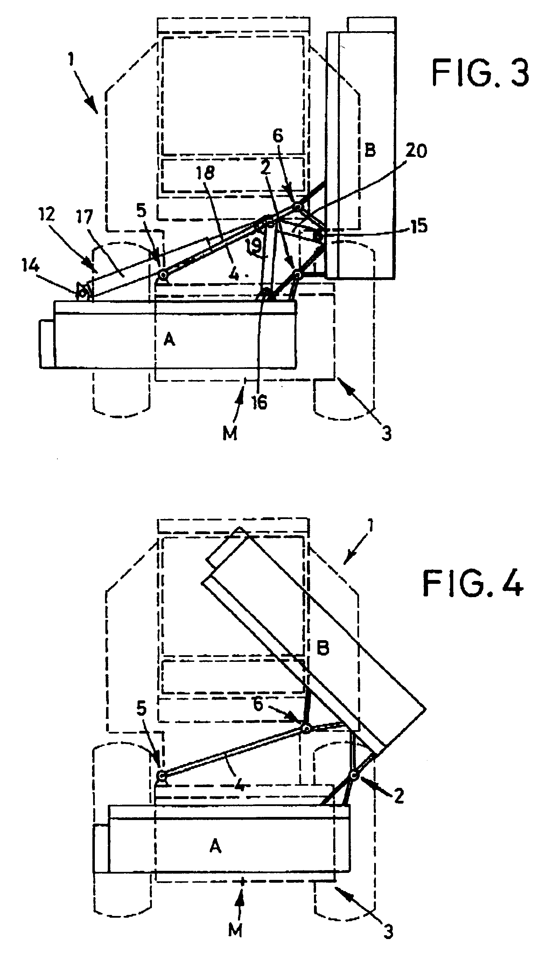

Außerdem ist in Fig. 3 der eigentliche Schwenkantrieb eingezeichnet. Die Darstellung dieses Schwenkantriebes erfolgt also nur in Fig. 3, um dadurch die Übersichtlichkeit der übrigen Figuren nicht zu beeinträchtigen. Der Schwenkantrieb 12 besteht aus einem Zylinder 17 und einem Kolben 18, wobei der Zylinder 17 gelenkig an dem ersten, verschiebbaren Vorsatzteil A anschließt, während der Kolben 18 an seinem vorderen Ende gelenkig zwei Hebel 19 und 20 trägt. Der Hebel 19 schließt dabei gelenkig im Bereich des vorderen Endes des verschiebbaren, ersten Vorsatzteiles A an, während der Hebel 20 gelenkig an dem verschwenkbaren, zweiten Vorsatzteil B anschließt, und zwar im Bereich nahe der Trennstelle zwischen den beiden Vorsatzteilen A und B.

Aus diesen Erläuterungen ist ersichtlich, daß dann, wenn der Schwenkantrieb 12 betätigt wird, als erstes eine Schwenkbewegung des verschwenkbaren, zweiten Vorsatzteiles B eintritt, wobei dabei im wesentlichen gleichzeitig das verschiebbare, erste Vorsatzteil A verschoben wird. Da der Lenker 4 stets die gleiche Länge aufweist, wird hierdurch bewirkt, daß gleichzeitig mit der Verschwenkung, das Verschieben der Vorsatzteile erfolgt und damit die beiden Vorsatzteile A und B aufeinandergelegt werden.

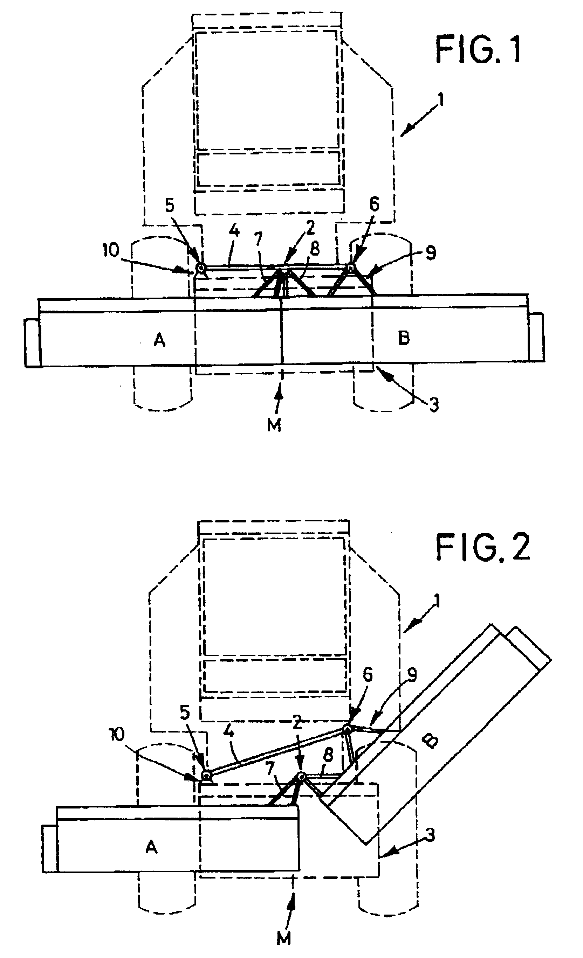

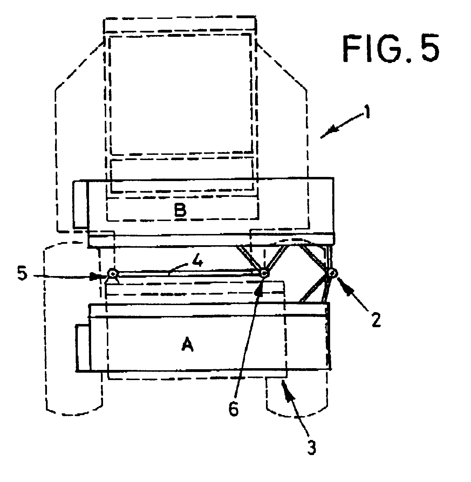

Die verschiedenen Arbeitsstellungen sind in den Fig. 2 bis 4 dargestellt und Fig. 5 zeigt dann die Transportstellung.

## Patentansprüche

1. Landwirtschaftliche Arbeitsmaschine mit einem ersten (A) und einem zweiten (B) Vorsatzteil, die quer zur Längsachse der Arbeitsmaschine beweglich getragen sind und miteinander über eine in Fahrtrichtung der Arbeitsmaschine weisende Schwenkachse (2) verbunden sind, wobei das erste Vorsatzteil (A) an einem von der Arbeitsmaschine getragenen Grundrahmen (3) quer zur Längsachse der Arbeitsmaschine verschiebbar gelagert ist und das zweite Vorsatzteil (B) schwenkbar und über das erste Vorsatzteil (A) legbar ist, mit einem Distanzlenker (4), der mit seinem einen Ende über ein ortsfestes Lager (5) gelenkig mit der Arbeitsmaschine verbunden ist und mit seinem anderen Ende mit dem zweiten Vorsatzteil (B) gelenkig verbunden ist, und mit einem einzigen Kolben/Zylinder-Antrieb (5) zur Überführung der Vorsatzteile (A, B) von deren Arbeitsposition in die Transportposition und umgekehrt, dessen eines Ende gelenkig an dem ersten Vorsatzteil (A) befestigt ist, dadurch gekennzeichnet,
daß zwei Lenker (19, 20) an einem gemeinsamen Gelenkpunkt miteinander verbunden sind und mit ihren beiden anderen Enden (15, 16) im Bereich der Trennstelle an dem ersten bzw. an dem zweiten Vorsatzteil (A, B) gelenkig befestigt sind und daß das andere Ende des Kolben/Zylinder-Antriebs (5) an dem gemeinsamen Gelenkpunkt der Lenker (19, 20) angreift.

## Claims

1. Agricultural machine having a first (A) and a second (B) front attachment, which front attachments are supported such that they can be moved transversely to the longitudinal axis of the machine and are interconnected by a swivel axle (2) pointing in the direction of travel of the machine, the first front attachment (A) being mounted on a base frame (3), supported by the machine, such that it is displaceable transversely to the longitudinal axis of the machine and the second front attachment (B) being pivotable and able to be placed above the first front attachment (A), having a distance control arm (4), which is connected articulately by its one end, via a fixed bearing (5), to the machine and is connected articulately by its other end to the second front attachment (B), and having a single piston/cylinder drive (5) for transferring the front attachments (A, B) from their working position into the transporting position and vice versa, the one end of the said piston/cylinder drive being fastened articulately to the first front attachment (A), characterized in that two control arms (19, 20) are interconnected at a common hinge point and are fastened articulately by their other two ends (15, 16), in the region of the dividing point, to the first and second front attachment (A, B) respectively, and in that the other end of the piston/cylinder drive (5) acts upon the common hinge point of the control arms (19, 20).

## Revendications

1. Machine agricole avec une première partie d'outil (A) et une deuxième (B), portées de façon mobile perpendiculairement à l'axe longitudinal de la machine et reliées entre elles par un axe de pivotement (2) orienté dans le sens de déplacement de la machine, dans laquelle la première partie d'outil (A) est supportée sur un cadre de base (3) porté par la machine, avec possibilité de translation perpendiculairement à l'axe longitudinal de la machine, et la deuxième partie d'outil (B) est pivotante et peut être posée par-dessus la première partie d'outil (A), avec un guide d'écartement (4) qui est relié par une extrémité, par l'intermédiaire d'un palier (5) stationnaire, avec la machine, et articulé par son autre extrémité à la deuxième partie d'outil (B), et avec un seul entraînement à vérin (5) destiné à faire passer les parties d'outil (A, B) de leur position de travail à la position de transport et vice-versa et dont l'extrémité libre est articulée sur la première partie d'outil (A), caractérisée en ce que deux guides (19, 20) sont reliés l'un à l'autre en un point d'articulation commun et fixés de façon articulée, dans la zone de séparation, sur la première partie d'outil et la deuxième respectivement et en ce que l'autre extrémité de l'entraînement à vérin (5) se met en prise sur le point d'articulation commun des guides (19, 20).
